# EUROPEAN PATENT SPECIFICATION

(11) **EP 3 882 063 B1**
(45) Date of publication and mention of the grant of the patent: **11.12.2024**
(21) Application number: 21162948.0
(22) Date of filing: 16.03.2021
(51) Int. Cl.: B60K 15/03, F02M 37/10

(54) **FIXATION APPARATUS OF FUEL PUMP**
FIXIERVORRICHTUNG EINER KRAFTSTOFFPUMPE
APPAREIL DE FIXATION DE POMPE À CARBURANT

(30) Priority: 17.03.2020 KR 20200032425
(43) Date of publication of application: 22.09.2021
(73) Proprietor: Hyundam Industrial Co., Ltd., Asan-si, Chungcheongnam-do 31424 (KR)
(72) Inventor: CHANG, Jin Wook, 31523 Chungcheongnam-do (KR); PARK, Kyoung Sik, 31481 Chungcheongnam-do (KR); KIM, Eui Tae, 31085 Chungcheongnam-do (KR); KIM, Yoon Jung, 31516 Chungcheongnam-do (KR); BANG, Hyo Won, 31165 Chungcheongnam-do (KR); PARK, Ju Hwan, 17848 Gyeonggi-do (KR); KOO, Myuing Seo, 42661 Daegu (KR)
(74) Representative: Gilani, Anwar

(56) References cited:
- WO-A1-2016/168547
- DE-A1- 102014 019 219
- JP-A- 2010 116 793
- KR-B1- 101 005 096
- US-B2- 8 596 249

## Description

### [Technical Field]

The present invention relates to a technology for supplying fuel to a vehicle, and more particularly, to a fixation apparatus of fuel pump for fixing a fuel pump to a fuel tank of a vehicle.

### [Background Art]

In general, an internal combustion engine vehicle obtains driving power by burning fossil fuels in an engine. Therefore, a vehicle is configured to store fuel inside the vehicle and can supply it to the engine, and usually, a vehicle using petroleum-based fuel is operated in a state in which a certain amount of fuel is stored in a fuel supply module, so a fuel tank for storing the fuel is essentially installed in the vehicle.

US 8596249B2 describes a fuel tank reinforced with a supportive fuel delivery module.

A fuel pump, in which components are modularized and assembled in an assembly form, is mounted inside a tank, and a fuel pump usually refers to a fuel pump assembly.

Such a fuel pump is an assembly including a pump, a filter, a reservoir cup, valves, and a bracket for assembling each other.

The fuel pump may normally be installed to be suspended from inside the fuel tank, mounted on the inner lower part of the fuel tank, or both mounted on and suspended from the inner lower part of the fuel tank at the same time, resulting in double support.

As described above, the fuel pump may be mounted in various cases, but in all cases, both aspects of mountability and vibration transfer attenuation should be considered.

With regard to the mountability of the fuel pump, the fuel pump module should first be firmly mounted and at the same time easy to assemble. That is, the installation should be easily performed by the operator, and after the installation, the assembly should be solid.

With regard to the vibration transfer attenuation of the fuel pump, after the fuel pump is installed, the vibration generated during operation should be attenuated and transferred to another place.

Since mounting of the fuel pump according to conventional arts is a method in which parts such as a mount are manufactured to be elastic and the fuel pump is fastened using a fastening means such as a bolt and nut from the top, there is a problem that both mountability and vibration transfer attenuation are inferior.

The above information disclosed in this Background section is only for enhancement of understanding of the background of the disclosure and it may therefore contain information that does not form the prior art that is already known to a person of ordinary skill in the art.

### [Disclosure]

### [Technical Problem]

In order to solve such a problem, the present invention is directed to providing a fixation apparatus of fuel pump capable of accurately and conveniently assembling a fuel pump to a fixed position of a fuel tank.

### [Technical Solution]

In order to solve such a problem, a fixation apparatus of fuel pump according to claim 1 is provided.

As the first latching protrusion is fixed in the first latching groove, the reservoir cup may be restricted from moving in the vertical (Z axis) direction, and as the fixing member is fixed in the fixing groove or fixing hole, the reservoir cup may be restricted from moving in the transverse (X axis) direction (perpendicular to the Z axis).

An accommodating groove for accommodating the fixing member may be formed in the reservoir cup, and the fixing member may be moved in the vertical direction along the accommodating groove.

The accommodating groove may be open to one side of the outer surface of the reservoir cup, the fixing member may include a hook protruding in the outer direction of the accommodating groove, and a rib at which the hook is caught may be formed on one side of the reservoir cup.

The fixation apparatus of fuel pump may further include a first guide member formed to protrude from an upper surface of the base and guiding the reservoir cup to move in the vertical direction.

The first latching protrusion may be formed to protrude laterally from the reservoir cup or formed to protrude from the lower side surface of the reservoir cup.

The reservoir cup may include a second latching protrusion that is disposed to be spaced apart parallel to the first latching protrusion on the other side of the reservoir cup, and a second latching groove into which the second latching protrusion is fixed may be formed in the base.

Any one of the first latching groove or the second latching groove may communicate with a seating groove in which any one of the first latching protrusion or the second latching protrusion is seated.

The fixation apparatus of fuel pump may further include a stopper protruding from the upper surface of the base to restrict the reservoir cup from moving in the transverse direction and disposed to be spaced apart from the first guide member.

The fixation apparatus of fuel pump may further include a second guide member disposed to be space apart from the first guide member and formed to protrude from the upper surface of the base, wherein the fixing member may include a combining member corresponding to the second guide member.

### [Advantageous Effects]

According to an embodiment of the present invention, the base is disposed between the reservoir cup and the fuel tank to attenuate vibration caused by the operation of the fuel pump, and since the latching protrusion is inserted into the latching groove to restrict the reservoir cup from moving in the Z axis direction and the fixing member restricts the reservoir cup from moving in the X axis, the convenience of fixing the fuel pump to the fuel tank is improved.

### [Description of Drawings]

The above and other aspects, features, and advantages of the present invention will become more apparent to those of ordinary skill in the art by describing embodiments thereof in detail with reference to the accompanying drawings, in which:
FIG. 1 is a perspective view showing a fixation apparatus of fuel pump according to an exemplary embodiment of the present invention;
FIG. 2 is an exploded perspective view showing a fixation apparatus of fuel pump according to an exemplary embodiment of the present invention;
FIG. 3 is a view partially showing a state in which a reservoir cup is seated on a base in a fixation apparatus of fuel pump according to an exemplary embodiment of the present invention;
FIG. 4 is a top plan view showing a state in which a reservoir cup is seated on a base in a fixation apparatus of fuel pump according to an exemplary embodiment of the present invention;
FIG. 5 is a top plan view showing a state in which a reservoir cup is moved on a base in the X axis direction in a fixation apparatus of fuel pump according to an exemplary embodiment of the present invention;
FIG. 6 is a cross-sectional view schematically showing a state in which a reservoir cup is seated on a base in a fixation apparatus of fuel pump according to an exemplary embodiment of the present invention;
FIG. 7 is a cross-sectional view schematically showing a state in which a reservoir cup is moved on a base in the X axis direction in a fixation apparatus of fuel pump according to an exemplary embodiment of the present invention;
FIG. 8 is a cross-sectional view schematically showing a fixing member and a stopper while a reservoir cup is moved on a base in the X axis direction in a fixation apparatus of fuel pump according to an exemplary embodiment of the present invention;
FIG. 9 is a side view schematically showing a state before a fixing member is moved in the Z axis direction in a fixation apparatus of fuel pump according to an exemplary embodiment of the present invention;
FIG. 10 is a side view schematically showing a state after a fixing member is moved in the Z axis direction in a fixation apparatus of fuel pump according to an exemplary embodiment of the present invention;
FIG. 11 is a cross-sectional view schematically showing a state after a fixing member is moved in the Z axis direction in a fixation apparatus of fuel pump according to an exemplary embodiment of the present invention.

### [Explanation of Reference Numerals]

| | | | |
|---|---|---|---|
| 100: | fixation apparatus of fuel pump | 110: | base |
| 120: | reservoir cup | 130: | fixing member |

### [Modes of the Invention]

Hereinafter, various embodiments will be described in more detail with reference to the accompanying drawings. Embodiments according to the present invention may be variously modified. Specific embodiments may be depicted in the drawings and described in detail in the detailed description. However, specific embodiments disclosed in the accompanying drawings are only intended to facilitate understanding of various embodiments. The scope of the invention is defined by the claims.

Terms including ordinal numbers such as first and second may be used to describe various elements, but these elements are not limited by the above-described terms. The above-described terms are only used to differentiate one element from another.

It is understood that the terms "comprise" or "have", when used in the embodiments of the present invention, are intended to specify the presence of stated features, integers, steps, operations, elements, components and/or a combination thereof described in the embodiments of the present invention but not preclude the possibility of the presence or addition of one or more other features, integers, steps, operations, elements, components, or a combination thereof. When an element is referred to as being "connected" or "linked" to other element, it will be understood that it can be directly connected or linked to the other element but intervening elements may also be present. On the other hand, when an element is referred to as being "directly connected" or "directly linked" to other element, it will be understood that there are no intervening elements present.

Meanwhile, a "module" or "member" for an element used in an embodiment of the present invention performs at least one function or operation. And, the "module" or "member" may perform a function or operation by hardware, software, or a combination of hardware and software. In addition, a plurality of "modules" or a plurality of "members" excluding "module" or "member" to be performed in a specific hardware or performed by at least one processor may be integrated into at least one module. Expressions in the singular include plural expressions unless the context clearly indicates otherwise.

In addition, in describing an embodiment of the present invention, when it is determined that a detailed description of a related known function or configuration may unnecessarily obscure the subject matter of the present invention, the detailed description thereof will be abbreviated or omitted.

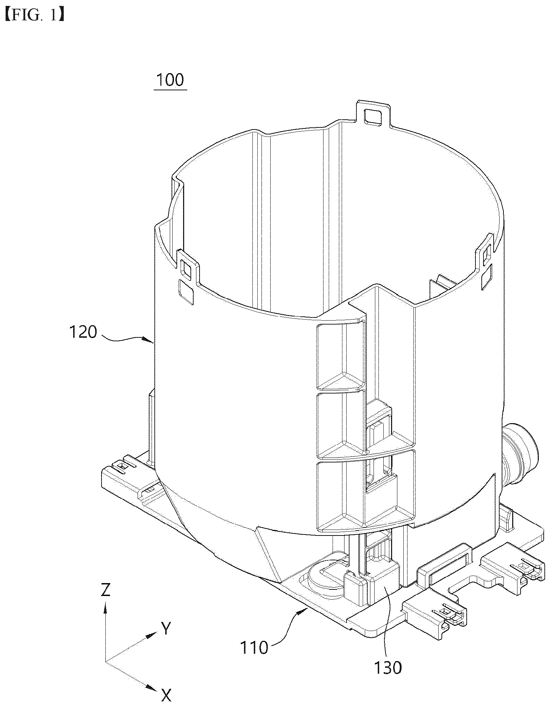

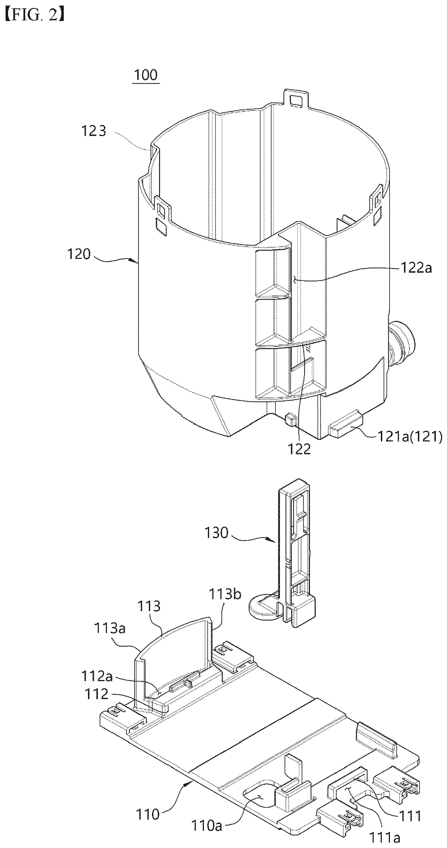

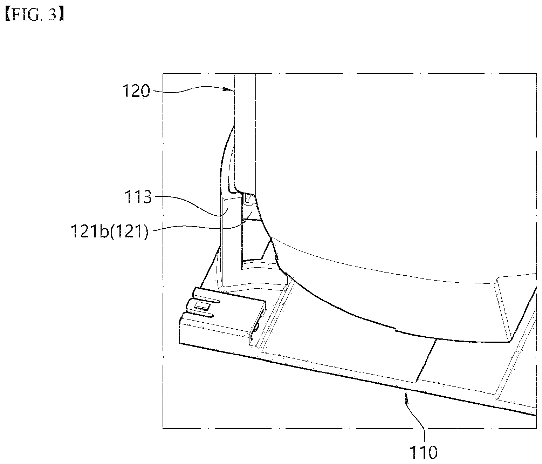

FIG. 1 is a perspective view showing a fixation apparatus of fuel pump according to an exemplary embodiment of the present invention, FIG. 2 is an exploded perspective view showing a fixation apparatus of fuel pump according to an exemplary embodiment of the present invention, and FIG. 3 is a view partially showing a state in which a reservoir cup is seated on a base in a fixation apparatus of fuel pump according to an exemplary embodiment of the present invention.

Referring to FIGS. 1 to 3, a fixation apparatus of fuel pump 100 according to an embodiment of the present invention includes a base 110, a reservoir cup 120 and a fixing member 130.

The base 110 may be coupled to an inner side surface of a fuel tank (not shown) of a vehicle by a welding method. The base 110 is not limited to being coupled to the inner side surface of the fuel tank by a welding method, and may be coupled by various methods such as an adhesive method. The base 110 may be made of a metal or plastic material, and in addition may be made of various materials having rigidity.

The bas hase a first latching groove (111a) formed on one side thereof. The base 110 may include latching members 111 and 112 and a guide member 113.

The latching members 111 and 112 may protrude from the upper surface of the base 110. The latching groove 111a may be formed in the latching members 111 and 112. The latching groove 111a may have a shape opened in a transverse direction (e.g., an X axis direction). The latching members 111 and 112 may include a first latching member 111 having a first latching groove 111a and a second latching member 112 having a second latching groove. The first latching member 111 and the second latching member 112 may be disposed to be spaced apart from each other.

The first guide member 113 may protrude from the upper surface of the base 110. The first guide member 113 may have a curved shape. The first guide member 113 may be disposed to be spaced apart from the second latching member 112. For example, the second latching member 112 may be disposed between the first latching member 111 and the first guide member 113. A seating groove 112a may be formed between the second latching member 112 and the first guide member 113.

In addition, the first guide member 113 may include a guide body 113a and a transverse guide member 113b. The guide body 113a may have a curved surface corresponding to the outer side surface of the reservoir cup 120. The transverse guide member 113b may extend from both side ends of the guide body 113a. The transverse guide member 113b may surround both side ends of a guide protrusion 123 formed in the reservoir cup 120. As the transverse guide member 113b contacts both side ends of the guide protrusion 123 while the guide body 113a contacts the side surfaces of the guide protrusion 123, the reservoir cup 120 may be guided for movement in a vertical direction.

The reservoir cup 120 may be moved in a vertical direction (e.g., a Z axis direction) to be seated on the base 110. The reservoir cup 120 may be formed in an approximately cylindrical shape. The reservoir cup 120 may be made of a metal or plastic material, and in addition may be made of various materials having rigidity. A configuration (not shown) of a fuel pump for pumping fuel from the fuel tank to an engine of the vehicle may be disposed inside the reservoir cup 120.

The reservoir cup 120 may be guided by the first guide member 113 to move in the Z axis direction. A portion of the reservoir cup 120 may be seated in the seating groove 112a.

The reservoir cup has a first latching protrusion (121a) on one side. The reservoir cup 120 may include a latching protrusion 121 and a rib 122. The latching protrusion 121 may include the first latching protrusion 121a and a second latching protrusion 121b. The first latching protrusion 121a may be formed to protrude laterally from the reservoir cup. The second latching protrusion 121b may be formed to protrude from the lower side surface of the reservoir cup 120. According to an embodiment of the present invention, the first latching protrusion 121a may be formed to protrude laterally from the reservoir cup 120 or may be formed to protrude from the lower side surface of the reservoir cup 120.

As the first latching protrusion 121a is moved in the X axis direction substantially perpendicular to the Z axis direction while the reservoir cup 120 is seated on the base 110, it is fixed in the first latching groove 111a. In addition, the second latching protrusion 121b may be disposed to be spaced apart parallel to the first latching protrusion on the other side of the reservoir cup. The second latching protrusion 121b may be fixed in the second latching groove.

In this way, as the latching protrusion 121 is inserted into the latching groove 111a, the reservoir cup 120 may be restricted from moving in the Z axis direction.

The fixing member 130 is installed in the reservoir cup 120 to fix the base (110) and the reservoir cup (120). The fixing member 130 may be installed in the reservoir cup 120 so as to be movable in the vertical direction. While the first latching protrusion of the reservoir cup 120 is inserted into the first latching groove, the fixing member 130 may be moved in the Z axis direction to fix the base 110 and the reservoir cup 120. The fixing member 130 may be formed in an approximately rod shape. The fixing member 130 may be made of a metal or plastic material, and in addition may be made of various materials having rigidity. An accommodating groove 112a for accommodating the fixing member 130 may be formed in the reservoir cup 120. The accommodating groove 112a may have a shape corresponding to the fixing member 130. The fixing member 130 may be moved in the Z axis direction through the accommodating groove 112a. A fixing groove or a fixing hole 110a into which one end of the fixing member 130 is inserted is formed in the base 110. Hereinafter, for convenience of description, the fixing groove will be referred to as including the fixing hole. A cross section of one end of the fixing member 130 may have a circular shape. The fixing groove 110a is formed in a circular shape corresponding to one end of the circular fixing member 130 so that it is possible to prevent damage to the periphery of the fixing groove 110a due to an impact caused by the insertion of the fixing member 130.

In this way, as the latching protrusion 121 is inserted into the latching groove 111a, the reservoir cup 120 is restricted from moving in the Z axis direction, and as the fixing member 130 is inserted into the fixing groove 110a, the reservoir cup 120 is restricted from moving in the X axis direction; so the reservoir cup 120 is firmly fixed to the base 110, improving convenience of fixing.

The fixing member 130 will be described in detail later with reference to the drawings.

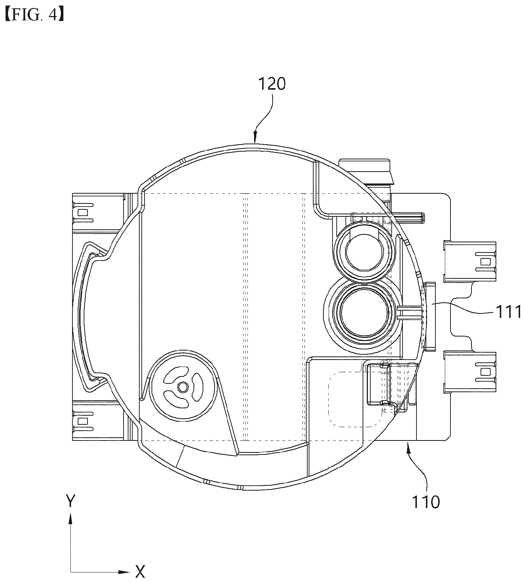

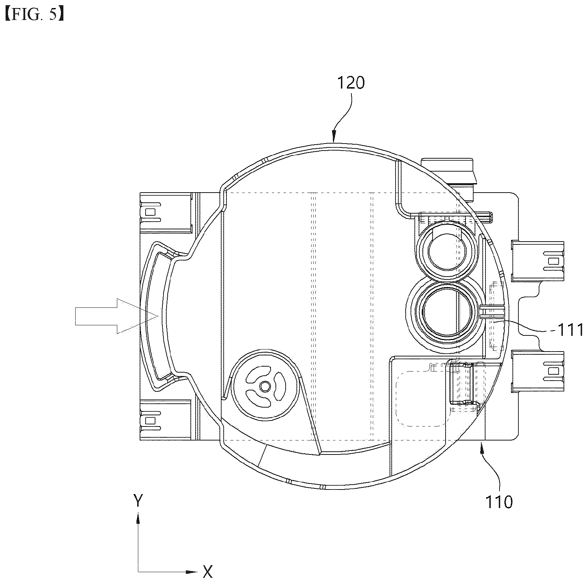

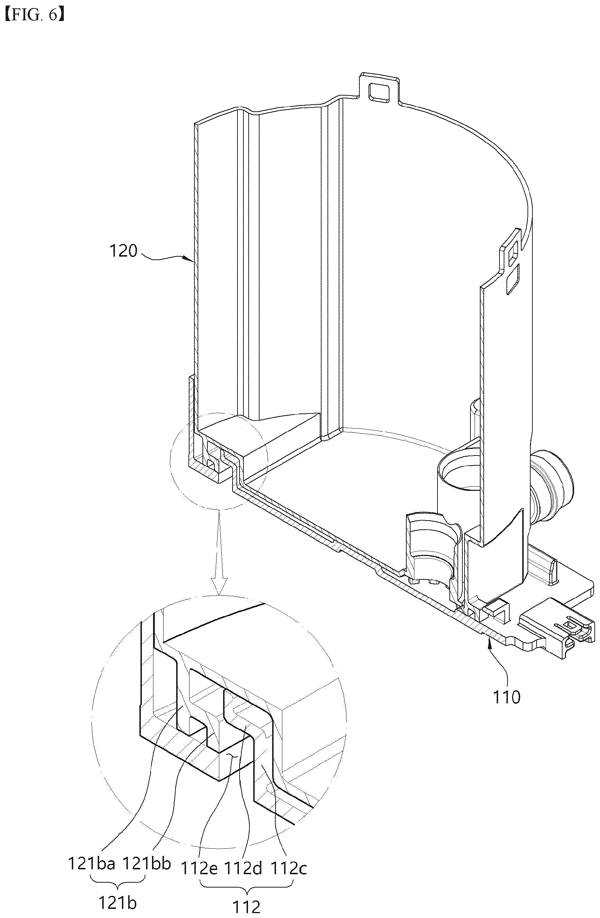

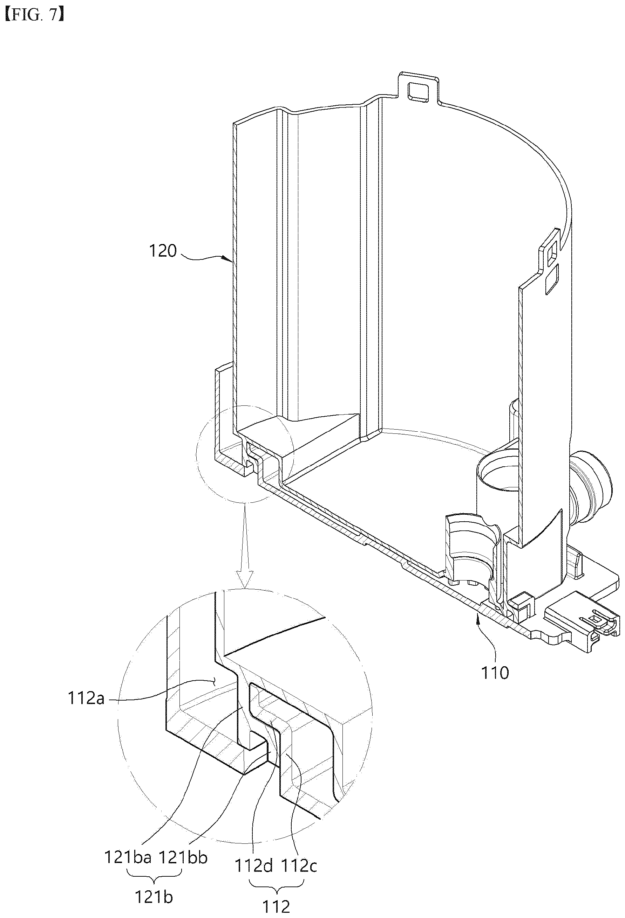

FIG. 4 is a top plan view showing a state in which a reservoir cup is seated on a base in a fixation apparatus of fuel pump according to an exemplary embodiment of the present invention, FIG. 5 is a top plan view showing a state in which a reservoir cup is moved on a base in the X axis direction in a fixation apparatus of fuel pump according to an exemplary embodiment of the present invention, FIG. 6 is a cross-sectional view schematically showing a state in which a reservoir cup is seated on a base in a fixation apparatus of fuel pump according to an exemplary embodiment of the present invention, and FIG. 7 is a cross-sectional view schematically showing a state in which a reservoir cup is moved on a base in the X axis direction in a fixation apparatus of fuel pump according to an exemplary embodiment of the present invention.

A process in which the reservoir cup 120 is moved in the X axis direction will be described in detail with reference to FIGS. 4 to 7.

The second latching protrusion 121b may include a Z axis protrusion 121ba and a X axis protrusion 121bb. The Z axis protrusion 121ba may protrude in the Z axis direction from the lower side surface of the reservoir cup 120. The X axis protrusion 121bb may extend and protrude in the X axis direction from the Z axis protrusion 121ba.

In addition, the second latching member 112 may include a first extending member 112c and a second extending member 112d. The first extending member 112c may extend in the Z axis direction from the lower side surface of the base 110. The second extending member 112d may extend in the X axis direction from the first extending member 112c. A second latching groove 112b may be formed between the second latching member 112 and the base 110. The second latching groove 112b may have a shape corresponding to the X axis protrusion 121bb. The second latching groove 112b may communicate with the seating groove 112a (see FIG. 2). According to an embodiment of the present invention, any one of the first latching groove 111a or the second latching groove 112b may communicate with a seating groove in which any one of the first latching protrusion 121a or the second latching protrusion 121b is seated.

As the reservoir cup 120 is moved in the X axis direction while the reservoir cup 120 is seated on the base 110, the X axis protrusion 121bb may be inserted into the second latching groove 112b. In addition, as described above, the first latching protrusion 112a is also inserted into the first latching groove 111a, so that the reservoir cup 120 may be restricted from being moved on the base 110 in the Z axis direction.

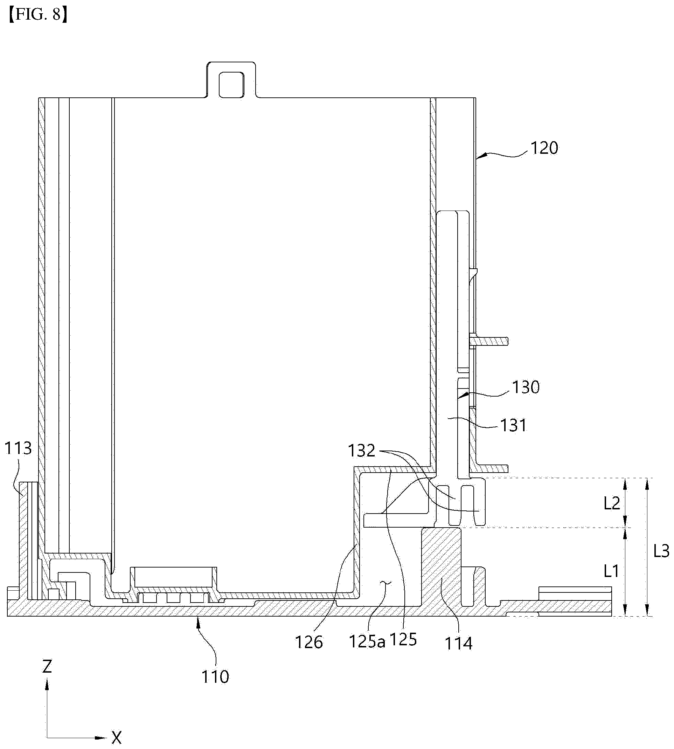

FIG. 8 is a cross-sectional view schematically showing a fixing member and a stopper while a reservoir cup is moved on a base in the X axis direction in a fixation apparatus of fuel pump according to an exemplary embodiment of the present invention.

Referring to FIG. 8, the fixing member 130 may include a fixing body 131 and a combining member 132. The fixing body 131 may be accommodated in the accommodating groove 122a of the reservoir cup 120. The combining member 132 may extend in the Z axis direction from the fixing body 131. The combining member 132 may be combined with a portion of the base 110.

In addition, the reservoir cup 120 may include a third extending member 125 and a fourth extending member 126. The third extending member 125 may extend in the X axis direction from the outer side surface of the reservoir cup 120. The fourth extending member 126 may extend in the Z axis direction from the third extending member 125. The fourth extending member 126 may contact the lower side surface of the reservoir cup 120. An accommodation space 125a for accommodating the combining member 132 may be formed between the third extending member 125 and the lower side surface of the base 110. While the combining member 132 is accommodated in the accommodation space 125a, the reservoir cup 120 may be moved on the base 110 in the X axis direction.

In addition, the fixation apparatus of fuel pump 110 according to an embodiment of the present invention may further include a stopper 114 formed to protrude from the upper surface of the base.

The stopper 114 may be disposed to be spaced apart from the first guide member 113. The stopper 114 may be parallel to the fourth extending member 126. The accommodation space 125a may be formed between the stopper 114 and the fourth extending member 126. When the reservoir cup 120 is moved on the base 110 in the X axis direction, the fourth extending member 126 may contact the stopper 114. The stopper 114 may restrict the reservoir cup 120 from being moved in the X axis direction. Accordingly, it is possible to prevent the latching members 111 and 112 from being damaged by the latching protrusion 121 due to the reservoir cup 120 being excessively moved in the X axis direction.

In addition, according to an embodiment of the present invention, the sum (L1 + L2) of the height L1 of the stopper 114 and the height L2 of the combining member 132 may be less than the distance L3 between the third extending member 125 and the lower side surface of the base 110. Accordingly, it is possible to prevent the combining member 132 from interfering with the stopper 114 while the reservoir cup 120 is moved in the X axis direction.

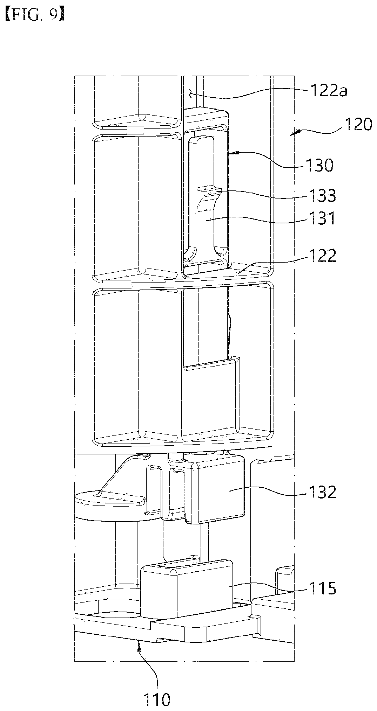

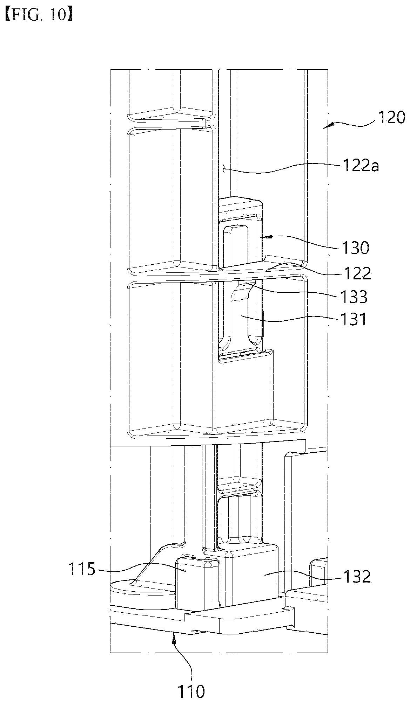

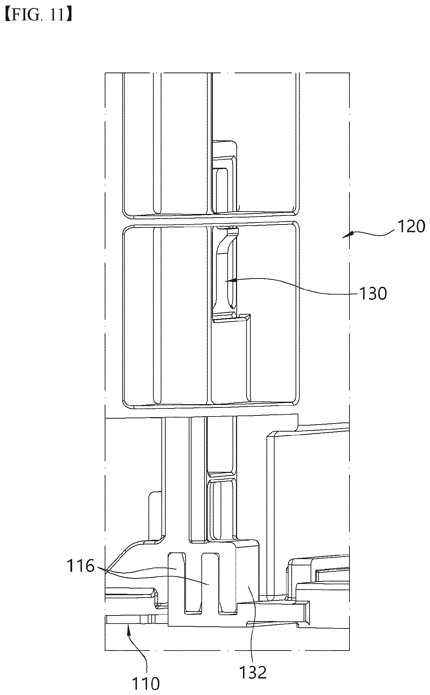

FIG. 9 is a side view schematically showing a state before a fixing member is moved in the Z axis direction in a fixation apparatus of fuel pump according to an exemplary embodiment of the present invention, FIG. 10 is a side view schematically showing a state after a fixing member is moved in the Z axis direction in a fixation apparatus of fuel pump according to an exemplary embodiment of the present invention, and FIG. 11 is a cross-sectional view schematically showing a state after a fixing member is moved in the Z axis direction in a fixation apparatus of fuel pump according to an exemplary embodiment of the present invention.

Referring to FIGS. 9 to 11, the fixing member 130 may further include a hook 133. The accommodating groove 122a may be open to one side of the outer surface of the reservoir cup 120. The hook 133 may protrude in the outer direction of the accommodating groove 122a. The hook 133 may be made of a material having elasticity such as a leaf spring.

In addition, a rib 122 at which the hook 133 is caught may be formed on one side of the reservoir cup 120. When the fixing member 130 is moved in the Z axis through the accommodating groove 122a, the hook 133 is caught at the rib 122, thereby preventing the fixing member 130 from being deviated from the base 110.

In addition, the fixation apparatus of fuel pump according to an embodiment of the present invention may further include a second guide member 115. The second guide member 115 may be disposed to be spaced apart from the first guide member 113 (see FIG. 2). The second guide member 115 may be formed to protrude from the upper surface of the base 110. The second guide member 115 may include a plurality of guide protrusions 116. The plurality of guide protrusions 116 may be disposed parallel to each other. The combining member 132 may be inserted between the plurality of guide protrusions 116. The plurality of guide protrusions 116 may guide the combining member 132 to move in the Z axis direction.

In this way, as the fixing member 130 is inserted in the fixing groove 110a (see FIG. 2), the reservoir cup 120 may be prevented from moving on the base 110 in the X axis direction.

As described above, preferred embodiments according to the present invention have been examined, and it is obvious to those skilled in the art that the present invention can be embodied in other specific forms. Therefore, the above-described embodiments are to be construed as illustrative rather than restrictive, and accordingly, the present invention is not limited to the above description and may be modified within the scope of the appended claims.

## Claims

1. A fixation apparatus of fuel pump, comprising:
a base(1 10) coupled to a fuel tank and having a first latching groove(111a) formed at one side thereof;
a reservoir cup(120) seated on the base(1 10), and wherein the reservoir cup(120) having a first latching protrusion(121a) on one side, and wherein the first latching protrusion(121a) is fixed in the first latching groove(111a); and
a fixing member(130) installed in the reservoir cup(120), wherein the fixing member(130) fixes the base(110) and the reservoir cup(120),
wherein a fixing groove or fixing hole(1 10a) into which the fixing member(130) is fixed is formed in the base(1 10).

2. The apparatus of claim 1, wherein as the first latching protrusion(121a) is fixed in the first latching groove(11 1a), the reservoir cup(120) is restricted from moving in a Z axis direction perpendicular to the base(1 10), and as the fixing member(130) is fixed in the fixing groove or fixing hole(1 10a), the reservoir cup(120) is restricted from moving in a X axis direction perpendicular to the Z axis.

3. The apparatus of claim 2, wherein an accommodating groove(122a) for accommodating the fixing member(130) is formed in the reservoir cup(120), and the fixing member(130) is moved in the Z axis direction along the accommodating groove(122a).

4. The apparatus of claim 3, wherein the accommodating groove(122a) is open to one side of the outer surface of the reservoir cup(120), the fixing member(130) comprises a hook(133) protruding in the outer direction of the accommodating groove(122a), and a rib(122) at which the hook(133) is caught is formed on one side of the reservoir cup(120).

5. The apparatus of claim 2, further comprising a first guide member(1 13) formed to protrude from an upper surface of the base(1 10) and guiding the reservoir cup(120) to move in the Z axis direction.

6. The apparatus of claim 5, wherein the first latching protrusion(121a) is formed to protrude laterally from the reservoir cup(120) or formed to protrude from the lower side surface of the reservoir cup(120).

7. The apparatus of claim 6, wherein the reservoir cup(120) comprises a second latching protrusion(121b) that is disposed to be spaced apart parallel to the first latching protrusion(121a) on the other side of the reservoir cup(120), and a second latching groove(112b) into which the second latching protrusion(121b) is fixed is formed in the base(1 10).

8. The apparatus of claim 7, wherein any one of the first latching groove(111a) or the second latching groove(112b) communicates with a seating groove(112a) in which any one of the first latching protrusion(121a) or the second latching protrusion(121b) is seated.

9. The apparatus of claim 5, further comprising a stopper(114) protruding from the upper surface of the base(1 10) to restrict the reservoir cup(120) from moving in the X axis direction and disposed to be spaced apart from the first guide member(1 13).

10. The apparatus of claim 5, further comprising a second guide member(115) disposed to be space apart from the first guide member(1 13) and formed to protrude from the upper surface of the base(110), wherein the fixing member(130) comprises a combining member(132) corresponding to the second guide member(115).

## Patentansprüche

1. Fixiervorrichtung einer Kraftstoffpumpe, umfassend:
eine Basis(110), die mit einem Kraftstofftank gekoppelt ist und eine erste Rastnut(111a) aufweist, die an einer Seite davon ausgebildet ist;
einen Reservoirbecher(120), der auf der Basis(110) sitzt, und wobei der Reservoirbecher(120) auf einer Seite einen ersten Rastvorsprung(121a) aufweist, und wobei der erste Rastvorsprung(121a) in der ersten Rastnut(1 11a) befestigt ist; und
ein Befestigungselement(130), das in dem Reservoirbecher(120) installiert ist, wobei das Befestigungselement(130) die Basis(110) und den Reservoirbecher(120) befestigt,
wobei in der Basis(110) eine Befestigungsnut oder ein Befestigungsloch(110a) ausgebildet ist, in der oder dem das Befestigungselement(130) befestigt wird.

2. Vorrichtung nach Anspruch 1, wobei der Reservoirbecher(120) daran gehindert wird, sich in einer Z-Achsenrichtung senkrecht zur Basis(110) zu bewegen, da der erste Rastvorsprung(121a) in der ersten Rastnut(111a) befestigt ist, und der Reservoirbecher(120) daran gehindert wird, sich in einer X-Achsenrichtung senkrecht zur Z-Achse zu bewegen, da das Befestigungselement(130) in der Befestigungsnut oder dem Befestigungsloch(110a) befestigt ist.

3. Vorrichtung nach Anspruch 2, wobei in dem Reservoirbecher(120) eine Aufnahmenut(122a) zur Aufnahme des Befestigungselements(130) ausgebildet ist und das Befestigungselement(130) in der Z-Achsenrichtung entlang der Aufnahmenut(122a) bewegt wird.

4. Vorrichtung nach Anspruch 3, wobei die Aufnahmenut(122a) zu einer Seite der Außenfläche des Reservoirbechers(120) hin offen ist, das Befestigungselement(130) einen in Außenrichtung der Aufnahmenut(122a) hervorstehenden Haken(133) umfasst und auf einer Seite des Reservoirbechers(120) eine Rippe(122) ausgebildet ist, an der der Haken(133) einrastet.

5. Vorrichtung nach Anspruch 2, ferner umfassend ein erstes Führungselement(113), das so ausgebildet ist, dass es von einer oberen Oberfläche der Basis(110) hervorsteht und den Reservoirbecher(120) so führt, dass er sich in der Z-Achsenrichtung bewegt.

6. Vorrichtung nach Anspruch 5, wobei der erste Rastvorsprung(121a) so ausgebildet ist, dass er seitlich von dem Reservoirbecher(120) hervorsteht oder so ausgebildet ist, dass er von der unteren Seitenfläche des Reservoirbechers(120) hervorsteht.

7. Vorrichtung nach Anspruch 6, wobei der Reservoirbecher(120) einen zweiten Rastvorsprung(121b) umfasst, der so angeordnet ist, dass er parallel zu dem ersten Rastvorsprung(121a) auf der anderen Seite des Reservoirbechers(120) beabstandet ist, und in der Basis(110) eine zweite Rastnut(112b) ausgebildet ist, in der der zweite Rastvorsprung(121b) befestigt wird.

8. Vorrichtung nach Anspruch 7, wobei eine von der ersten Rastnut(111a) oder der zweiten(112b) Rastnut mit einer Sitznut(112a) in Verbindung steht, in der einer des ersten Rastvorsprungs(121a) oder des zweiten Rastvorsprungs(121b) sitzt.

9. Vorrichtung nach Anspruch 5, ferner umfassend einen Anschlag(114), der von der oberen Oberfläche der Basis(110) hervorsteht, um zu verhindern, dass sich der Reservoirbecher(120) in der X-Achsenrichtung bewegt, und der so angeordnet ist, dass er von dem ersten Führungselement(113) beabstandet ist.

10. Vorrichtung nach Anspruch 5, ferner umfassend ein zweites Führungselement(115), das so angeordnet ist, dass es vom ersten Führungselement(113) beabstandet ist, und so ausgebildet ist, dass es von der oberen Oberfläche der Basis(110) hervorsteht, wobei das Befestigungselement(130) ein Verbindungselement(132) umfasst, das dem zweiten Führungselement(115) entspricht.

## Revendications

1. Appareil de fixation de pompe à carburant, comprenant :
une base (110) couplée à un réservoir de carburant et comportant une première rainure de verrouillage (111a) formée sur un côté de celle-ci ;
une coupelle de réservoir (120) reposant sur la base (110), et ladite coupelle de réservoir (120) comportant une première saillie de verrouillage (121a) sur un côté, et ladite première saillie de verrouillage (121a) étant fixée dans la première rainure de verrouillage (111a) ; et
un élément de fixation (130) installé dans la coupelle de réservoir (120), ledit élément de fixation (130) fixant la base (110) et la coupelle de réservoir (120),
une rainure de fixation ou un trou de fixation (110a) dans lequel l'élément de fixation (130) est fixé étant formé dans la base (110).

2. Appareil selon la revendication 1, lorsque la première saillie de verrouillage (121a) est fixée dans la première rainure de verrouillage (111a), le déplacement de ladite coupelle de réservoir (120) étant empêché dans la direction de l'axe Z perpendiculaire à la base (110), et lorsque l'élément de fixation (130) est fixé dans la rainure de fixation ou le trou de fixation (110a), le déplacement de ladite coupelle de réservoir (120) étant empêché dans la direction de l'axe X perpendiculaire à l'axe Z.

3. Appareil selon la revendication 2, une rainure de logement (122a) destinée à loger l'élément de fixation (130) étant formée dans la coupelle de réservoir (120), et ledit élément de fixation (130) étant déplacé dans la direction de l'axe Z le long de la rainure de logement (122a).

4. Appareil selon la revendication 3, ladite rainure de logement (122a) étant ouverte sur un côté de la surface extérieure de la coupelle de réservoir (120), ledit élément de fixation (130) comprenant un crochet (133) faisant saillie dans la direction extérieure de la rainure de logement (122a), et une nervure (122) au niveau de laquelle le crochet (133) est attrapé étant formée sur un côté de la coupelle de réservoir (120).

5. Appareil selon la revendication 2, comprenant en outre un premier élément de guidage (113) formé pour faire saillie à partir d'une surface supérieure de la base (110) et guidant la coupelle de réservoir (120) de manière à la déplacer dans la direction de l'axe Z.

6. Appareil selon la revendication 5, ladite première saillie de verrouillage (121a) étant formée de manière à faire saillie latéralement à partir de la coupelle de réservoir (120) ou formée de manière à faire saillie à partir de la surface latérale inférieure de la coupelle de réservoir (120).

7. Appareil selon la revendication 6, ladite coupelle de réservoir (120) comprenant une seconde saillie de verrouillage (121b) qui est disposée de manière à être espacée parallèlement à la première saillie de verrouillage (121a) de l'autre côté de la coupelle de réservoir (120), et une seconde rainure de verrouillage (112b) dans laquelle la seconde saillie de verrouillage (121b) est fixée étant formée dans la base (110).

8. Appareil selon la revendication 7, l'une quelconque parmi la première rainure de verrouillage (111a) ou la seconde rainure de verrouillage (112b) communiquant avec une rainure d'appui (112a) dans laquelle l'une quelconque parmi la première saillie de verrouillage (121a) ou la seconde saillie de verrouillage (121b) repose.

9. Appareil selon la revendication 5, comprenant en outre une butée (114) faisant saillie de la surface supérieure de la base (110) de manière à empêcher le déplacement du réservoir (120) dans la direction de l'axe X et disposé de manière à être espacé du premier élément de guidage (113).

10. Appareil selon la revendication 5, comprenant en outre un second élément de guidage (115) disposé de manière à être espacé du premier élément de guidage (113) et formé de manière à faire saillie à partir de la surface supérieure de la base (110), ledit élément de fixation (130) comprenant un élément de combinaison (132) correspondant au second élément de guidage (115).
